# EUROPÄISCHE PATENTSCHRIFT

(11) **EP 2 043 808 B1**
(45) Veröffentlichungstag und Bekanntmachung des Hinweises auf die Patenterteilung: **28.08.2013**
(21) Anmeldenummer: 07764934.1
(22) Anmeldetag: 29.06.2007
(51) Int. Cl.: B23K 20/04, B23K 20/233, B21B 1/22, B21B 1/28

(54) **VERFAHREN ZUM HERSTELLEN EINES BAUTEILS AUS EINEM TITAN-FLACHPRODUKT FÜR HOCHTEMPERATURANWENDUNGEN MIT AUFBRINGEN EINER ALUMINIUM-SCHICHT AUF MINDESTENS EINE SEITE DES TITAN-FLACHPRODUKTES DURCH WALZPLATTIEREN UND KALTWALZEN**
METHOD FOR PRODUCING A COMPONENT FROM A TITANIUM FLAT PRODUCT FOR HIGH-TEMPERATURE APPLICATIONS BY APPLYING AN ALUMINIUM LAYER ONTO AT LEAST ONE SIDE OF THE TITANIUM FLAT PRODUCT BY ROLL-BONDING AND COLD-ROLLING
PROCÉDÉ POUR FABRIQUER UNE PIÈCE FAITE D'UN PRODUIT PLAT EN TITANE POUR DES UTILISATIONS À HAUTE TEMPÉRATURE AVEC APPLICATION D'UNE COUCHE D'ALUMINIUM SUR AU-MOINS UNE FACE DU PRODUIT PLAT EN TITANE PAR PLAQUAGE PAR LAMINAGE ET LAMINAGE À FROID

(30) Priorität: 05.07.2006 DE 102006031469
(43) Veröffentlichungstag der Anmeldung: 08.04.2009
(73) Patentinhaber: Wickeder Westfalenstahl GmbH, 58739 Wickede / Ruhr (DE)
(72) Erfinder: LAN, Yun Dr., 58119 Hagen (DE); MAGER, Peter, 59469 Ense-Gerlingen (DE); PAULI, Jan-Bernd, 59457 Werl (DE); GERLACH, Thorsten, 59457 Werl (DE)
(74) Vertreter: Brune, Axel
(86) Internationale Anmeldenummer: PCT/EP2007/005760
(87) Internationale Veröffentlichungsnummer: WO 2008/003430

(56) Entgegenhaltungen:
- DE-A1- 3 401 670
- DE-A1- 10 103 169
- JP-A- 1 166 891
- JP-A- 9 182 981
- JP-A- 63 140 782

## Beschreibung

Die Erfindung betrifft ein Verfahren zum Herstellen eines Bauteils aus einem aus einer Titanlegierung erzeugten Titan-Flachprodukt, wie aus einer Titanlegierung erzeugtem Titanblech oder -band, für Hochtemperaturanwendungen Bei derartigen Bauteilen handelt es sich beispielsweise um Bestandteile von Abgasanlagen für Verbrennungsmotoren, von Wärmetauschern oder vergleichbaren Vorrichtungen, bei deren Einsatz regelmäßig Betriebstemperaturen von 600 - 900 °C auftreten.

Hochwertige Abgasanlagen für beispielsweise in Automobilen eingesetzte Verbrennungsmotoren werden heutzutage aus Edelstählen hergestellt. Stahlwerkstoffe dieser Art sind gut verformbar und zeichnen sich durch eine hohe spezifische Festigkeit und gute Korrosionsbeständigkeit auch bei hohen Betriebstemperaturen aus. Diesen Vorteilen steht jedoch der Nachteil eines hohen Gewichts in Folge der vergleichbar hohen Dichte (ca. 8 g/cm³) von Edelstahl gegenüber.

Titan und seine Legierungen sind aufgrund ihrer deutlich geringeren Dichte von ca. 4,5 g/cm³ wesentlich leichter als Stähle. Sie besitzen darüber hinaus eine hohe spezifische Festigkeit und eine sehr gute Korrosionsbeständigkeit bei Raumtemperatur. Ihre maximale Einsatztemperatur ist jedoch dadurch beschränkt, dass bei hohen Betriebstemperaturen eine beschleunigte Oxidation einsetzt. Daher werden Bauteile, die aus konventionellen warmfesten Titanlegierungen hergestellt sind, nur bis zu Betriebstemperaturen von weniger als 600 °C verwendet.

Aus der DE 101 03 169 B4 ist es bekannt, dass die Hochtemperaturfestigkeit und die Oxidationsbeständigkeit von aus Titanblech hergestellten Bauteilen dadurch verbessert werden kann, dass die Titanbleche vor ihrer Verformung zu dem jeweiligen Bauteil mit einer Aluminiumfolie walzplattiert werden. Im Zuge des bekannten Verfahrens wird auf ein Titanblech mindestens einseitig eine Aluminiumfolie aufgebracht, deren Dicke im Vergleich zur Dicke des Titanbleches klein ist. Durch Wärmebehandlung des walzplattierten Titanbleches wird aus der Aluminium-Beschichtung und dem darunter liegenden Titansubstrat eine aus einer TiAl bzw. TiAl₃ bestehende Deckschicht gebildet. Damit die schwer verformbare TiAl-Schicht die Verformung nicht behindert, wird die Wärmebehandlung bevorzugt erst nach der Verformung des mit der Aluminiumschicht belegten Titanblechs zu dem Bauteil durchgeführt.

Praktische Versuche haben gezeigt, dass das in der DE 101 03 169 B4 beschriebene Verfahren voraussetzt, dass das mit der Al-Schicht belegte Titansubstrat aus hochreinem Titan besteht, das gemäß DIN 17 850 unter der Werkstoffkurzbezeichnung Ti1, Werkstoffnummer 3.7025, geführt wird und neben Titan und unvermeidbaren Verunreinigungen bis max. 0,15 % Fe, bis max. 0,12 % O, bis max. 0,05 % N, bis max. 0,06 % C, bis max. 0,013 % H (Angaben in Gew.-%) enthalten kann. Bei Verwendung von Titanblechen, die aus weniger reinem bzw. höher legiertem Titan hergestellt sind, lässt sich der gemäß der DE 101 03 169 B4 nach dem Walzplattieren erhaltene Al-Ti-Verbund nicht zu einem Bauteil kaltverformen.

In der Praxis zeigt sich allerdings, dass der Verwendbarkeit von hochreinem Ti1-Titan aufgrund der bei Temperaturen von mehr als 620 °C einsetzenden Kornvergröberung Grenzen gesetzt sind. Hinzu kommt, dass hochreines Titan nur zu einem vergleichbar hohen Preis erhältlich ist.

Des Weiteren ist aus der JP-63140782-A, d.h. nächstkommenden Stand der Technick, ein Verfahren bekannt, bei dem ein Titanband beidseitig mit einer Aluminiumfolie beschichtet wird. Dazu wird das Titanband zunächst auf seiner Ober- und Unterseite durch gleichzeitig erfolgendes Walzplattieren bei Verformungsgraden von 30 - 70 % mit jeweils einer Folie aus im Wesentlichen reinem Aluminium belegt. Anschließend wird das beidseitig mit der Al-Schicht belegte Titansubstrat bei der Temperatur von 500 - 600 °C für eine Dauer von 1 - 6 Stunden in einem Durchlaufofen unter Vakuum oder unter einer Inertgasatmosphäre diffusionsgeglüht, so dass sich in der Grenzschicht zwischen dem Titanband und den Al-Beschichtungen intermetallische Verbindungen bilden, die einen sicheren Zusammenhalt des Al-Ti-Al-Verbunds gewährleisten. In der Praxis ist allerdings die Hochtemperatureignung dieses Materialverbundes aufgrund des Reinaluminiumanteils auf den Bandoberflächen begrenzt. Darüber hinaus besteht die Gefahr, dass es bei einer Umformung des Al-Ti-Al-Verbundes zu einem Formbauteil aufgrund seiner schlechten Verformbarkeit im Bereich der Grenzschicht zu einer Ablösung der Al-Auflagen vom Ti-Kernband kommt.

Ferner ist aus der WO 02/068185 A2 und der US 3,359,142 ein Verfahren zur Plattierung einer Titanfolie aus einer Titanlegierung auf ein Aluminiumblech aus einer Aluminiumlegierung bekannt geworden. Auch hier wird demnach kein Reinaluminium oder Reintitan verwendet. Die Dicke der Titanfolie bleibt jedoch weit hinter der Dicke des Aluminiumsblechs zurück, so dass die hier vorgestellten Verfahrensschritte nicht für die Plattierung eines Titan-Flachproduktes, beispielsweise eines Titanblechs, mit einer Aluminiumfolie geeignet sind.

Ausgehend von dem voranstehend erläuterten Stand der Technik bestand die Aufgabe der Erfindung darin, ein Verfahren anzugeben, das es ermöglicht, aus einem aus konventionellen Titanlegierungen erzeugten Titan-Flachprodukten, wie aus konventionellen Titanlegierungen erzeugten Titanblechen oder -band, Bauteile mit verbesserter Hochtemperatureignung herzustellen.

Diese Aufgabe ist durch die in Anspruch 1 definierten Schutte und Merkmale gelöst worden, d.h. bei der Herstellung von Bauteilen für Hochtemperaturanwendungen aus einem aus einer Titanlegierung erzeugten Titan-Flachprodukt, wie aus einer Titanlegierung erzeugtes Titanblech oder -band, folgende Arbeitschritte durchgeführt und Bedingungen berücksichtigt werden:
a) Aufbringen einer Al-Schicht auf mindestens eine Seite des Titan-Flachprodukts durch Walzplattieren des Titan-Flachprodukts mit einer Al-Folie, die aus einer Al-Legierung erzeugt ist,
b) Kaltwalzen des mit der Al-Schicht belegten Titan-Flachprodukts,
c) wobei die Ausgangsdicke der Al-Folie im Bereich von 0,03-0,3 mm und die Ausgangsdicke des Titan-Flachprodukts im Bereich von 1,0-8,0 mm liegt und
   wobei der im Zuge des Walzplattierens und des Kaltwalzens erzielte, auf die Gesamtdicke von Titan-Flachprodukt und Al-Folie bezogene Umformgrad 30 - 90 % beträgt und die Dicke der Al-Folie unter Berücksichtigung des Gesamtverformungsgrades und der Solldicke des mit der Al-Schicht belegten Titan-Flachprodukts so gewählt wird, dass die Dicke der auf dem Titan-Flachprodukt nach dem Walzplattieren und dem Kaltwalzen jeweils vorhandenen Al-Schicht 90 µm, insbesondere 70 µm, nicht überschreitet,
d) Weichglühen des mit der Al-Schicht belegten Titan-Flachprodukts im Durchlaufofen bei Glühtemperaturen von 600 - 750 °C für eine Dauer von 0,1 - 10 min oder im Haubenofen bei Glühtemperaturen von 550 - 650 °C für eine Dauer von 1 - 30 h,
e) Umformen des weichgeglühten, mit der Al-Schicht belegten Titan-Flachprodukts zu dem Bauteil,
f) Wärmebehandeln des aus dem mit der Al-Schicht belegten Titan-Flachprodukt geformten Bauteils zur Ausbildung einer intermetallische Phasen umfassenden Deckschicht auf dem Bauteil.

Gemäß der Erfindung wird als Basis für das herzustellende Bauteil ein Titan-Substrat eingesetzt, dass im Gegensatz zum Stand der Technik nicht aus hochreinem Titan, sondern aus einer Titan-Legierung besteht. Diese Titan-Basis wird zunächst mindestens einseitig, bevorzugt beidseitig, in an sich bekannter Weise durch Walzplattieren mit einer Al-Folie belegt, die, gemäß der Erfindung, wiederum nicht aus reinem Aluminium, sondern eine Al-Legierung besteht. Auf dem walzplattierten Titan-Substrat bildet die Al-Folie eine Al-Schicht, die das Titan-Kernmaterial des durch die Al-Folie und das Ti-Substrat gebildeten Verbunds gegen Korrosion auch bei einem Hochtemperatureinsatz von 900 °C und mehr schützt. Wesentlich für den Erfolg der Erfindung ist, dass das mit der Al-Schicht walzplattierte Titan-Substrat nach dem Walzplattieren zusätzlich kaltgewalzt wird. Überraschend hat sich gezeigt, dass erst durch diesen erfindungsgemäß durchgeführten Kaltwalzschritt die vollständige Rekristallisation des Ti-Substrats erreicht wird, welche Voraussetzung für die gute Verformbarkeit des aus dem Ti-Substrat und der Al-Schicht gebildeten Verbunds trotz der Tatsache ist, dass das erfindungsgemäß als Substrat verarbeitete Titan-Flachprodukt aus einer konventionellen Titanlegierung erzeugt worden ist.

Das Walzplattieren und das anschließende Kaltwalzen werden zu diesem Zweck so durchgeführt, dass der über diese beiden Verformungsschritte erzielte Gesamtverformungsgrad εₕ 30 - 90 % beträgt (εₕ = Δh / ∑(h_{Al} + h_{Ti}) ; mit Δh: über das Walzplattieren und das Kaltwalzen erzielte Abnahme der Summe der Dicken von Al-Folie(n) und Titan-Flachprodukt, h_{AlSi}: Dicke (n) der Al-Folie (n) vor dem Walzplattieren, h_{Ti}: Dicke des Titan-Flachprodukts vor dem Walzplattieren.

Bei Einhaltung dieser Gesamtumformgrade wird eine gute und dauerhaft feste Anbindung der Al-Folie(n) an das Ti-Substrat erreicht. Dieser Effekt kann dadurch besonders sicher gewährleistet werden, dass der im Zuge des Walzplattierens und des Kaltwalzens insgesamt erzielte Umformgrad im Bereich von 40 - 80 % liegt. Durch diese Verformungsbedingungen wird zudem in dem mit der Al-Schicht belegten Ti-Substrat die für die nachfolgende Weichglühung und Verformung günstige Mikrostruktur besonders vorteilhaft ausgebildet.

Die Dicke der auf das Titanflachprodukt aufgelegten . Al-Folie und die Umformbedingungen werden beim erfindungsgemäßen Verfahren so gewählt, dass die Auflagedicke nach der Kaltwalzung 90 µm, insbesondere 70 µm, nicht überschreitet. Durch Einhaltung dieser Schichtdicke ist gewährleistet, dass sich das erfindungsgemäß erzeugte Ti-Blech und die daraus geformten Bauteile trotz der Al-Auflage gut verschweißen lassen. Gemäß der Erfindung, wird die Ausgangsdicke der Al-Folie im Bereich von 0,03 - 0,3 mm liegen, während die Ausgangsdicken des Titan-Flachprodukts 1,0 - 8,0 mm betragen.

Der nach dem Walzplattieren und dem Kaltwalzen erhaltene Verbundwerkstoff wird weichgeglüht, um die im Zuge der vorangegangenen Kaltverformung im Material entstandenen Spannungen abzubauen und ein für die anschließende Verformung optimales, rekistallisiertes Gefüge herzustellen. Die Glühbedingungen sind dabei so gewählt, dass die Dicke des zwischen dem Ti-Substrat und der jeweils darauf aufgebrachten Al-Schicht gebildeten Übergangsbereichs, in dem sich intermetallische Phasen bilden, auf maximal 30 µm, insbesondere maximal 16 µm, begrenzt ist. Praktische Versuche haben gezeigt, dass bis zu dieser Dicke sicher gewährleistet ist, dass es nach dem Weichglühen auch bei starken Verformungen des erfindungsgemäß gebildeten Ti-Al-Verbunds zu keiner Ablösung der Al-Beschichtung kommt.

Im Hinblick auf die angestrebte Ausbildung einer dünnen und dennoch in Bezug auf die Anbindung der Al-Deckschicht wirksamen Zwischenschicht hat es sich als günstig herausgestellt, wenn die Glühtemperaturen niedrig gewählt werden. So können beispielsweise Zwischenschichtdicken bis maximal 16 µm dann besonders sicher erzielt werden, wenn die Glühtemperatur der Durchlauf- oder Haubenglühung auf maximal 630 °C begrenzt wird.

Die Ausbildung einer übermäßig dicken Grenzschicht wird gemäß der Erfindung insbesondere auch dadurch vermieden, dass als Werkstoff für die Al-Beschichtung kein reines Aluminium, sondern eine niedrig legierte Al-Legierung verwendet wird. Bei dieser handelt es sich bevorzugt um eine AlSi-Legierung, welche beispielsweise folgende Zusammensetzung aufweisen kann (in Masse-%):
Si: 0,1 - 1,6 %, Fe: 0,1 - 0,8 %, Zn: < 0,2 %,
Be: < 0,02 %, Mn: < 0,2 %, Cu: < 0,2 %, Cr: < 0,2 %,
Ti: < 0,2 %,Mg: < 0,1 %, Rest Al und unvermeidbare Verunreinigungen. In praktischen Versuchen haben sich Al-Folien als Beschichtungswerkstoff bewährt, die aus einer AlSi0,8-Legierung erzeugt worden sind. Die Anwesenheit von Si als Hauptlegierungselement in diesen Legierungen führt zu einer verlangsamten intermetallischen Schichtbildung bei der Glühung. Zudem werden durch den Si-Gehalt die Festigkeit und die Bruchdehnung des Aluminiums verbessert sowie die Korrosionsbeständigkeit des walzplattierten und kaltgewalzten Flachprodukts insgesamt erhöht.

In Folge der erfindungsgemäß nach dem Walzplattieren und dem Kaltwalzen durchgeführten Weichglühung müssen erfindungsgemäß verarbeitete Titan-Flachprodukte nicht mehr aus hochreinem Titan bestehen, sondern können aus konventionellen niedrig oder hoch legierten Titan-Werkstoffen hergestellt sein.

Für diesen Zweck geeignete, niedrig legierte Ti-Legierungen sind die aus DIN 17 851 bekannten niedrig legierten Ti-Legierungen, die (Angaben in Masse-%) bis zu 0,05 % N, bis zu 0,1 % C, bis zu 0,015 % H, bis zu 0,3 % Fe, bis zu 0,25 % O, bis zu 0,1 % Al, sowie 0,05 - 0,5 % Si oder 0,10 - 0,3 % Pd jeweils einzeln oder 0,5 - 1,0 % Ni und 0,1 - 0,5 % Mo gemeinsam, Rest Ti und unvermeidbare Verunreinigungen enthalten, wobei der Anteil der den Verunreinigungen zugeordneten Elemente einzeln bis zu 0,1 % und die Summe der Verunreinigungen bis zu 0,4 % betragen können. Entsprechend zusammengesetzte niedrig legierte Ti-Legierungen sind beispielhaft in Tabelle A angegeben.

Insbesondere lassen sich bei erfindungsgemäßer Vorgehensweise aus der mit Silizium legierten Ti-Zusammensetzungen TiSi0,3 Bauteile fertigen, die sich besonders für den Einsatz bei Betriebstemperaturen von 600 - 900 °C eignen. Die Legierungsgehalte der genannten niedrig legierten Ti-Werkstoffe lassen sich dabei problemlos so einstellen, dass sich ein optimales Verhältnis aus Hochtemperaturbeständigkeit und Verformbarkeit des Ti-Werkstoffs ergibt.

Für Einsätze bei noch höheren Betriebstemperaturen, insbesondere im Bereich von 900 - 1000 °C, eignen sich Ti-Substrate, die aus höher legierten Ti-Legierungen erzeugt sind. Gemäß DIN 17 851 können solche Ti-Legierungen (in Masse-%) folgende Zusammensetzung aufweisen (in Masse-%): Al: 2,3 - 7,8 %, sowie wahlweise mindestens eines oder mehrere Elemente aus der Gruppe V, Sn, Zr, Mo, Cu, Si, Fe, O, N, C, H, wobei für deren Gehalte gilt V: ≤ 6,9 %, Sn: ≤ 3,5 %, Zr: ≤ 6,9 %, Mo: ≤ 5,8 %, Cu: ≤ 1,2 %, Si: ≤ 0,8 %, Fe: ≤ 3,5 %, O: ≤ 0,3 % N: ≤ 0,06 %, C: ≤ 0,09 %, H: ≤ 0,02 %, Rest Ti und unvermeidbare Verunreinigungen, wobei der Anteil der den Verunreinigungen zugeordneten Elemente einzeln bis zu 0,1 % und die Summe der Verunreinigungen bis zu 0,4 % betragen können. Geeignet zusammengesetzte hoch legierte Ti-Legierungen sind ebenfalls in der DIN 17 851 angegeben und in Tabelle B beispielhaft zusammengestellt.

Die erfindungsgemäß nach dem Kaltwalzen durchgeführte Weichglühung kann im Durchlauf oder stapelweise in einem Haubenglühofen erfolgen. Dabei hat sich herausgestellt, dass sich im Fall der Haubenglühung besonders gute Arbeitsergebnisse einstellen, wenn das in erfindungsgemäßer Weise mit der Al-Schicht belegte Ti-Flachprodukt als Open-Coil in den Haubenofen gesetzt wird. Bei einem "Open-Coil" liegen die einzelnen Windungen des Coils mit Abstand zueinander, so dass das durch den Haubenofen strömende Gas auch die zwischen den Windungen vorhandenen Zwischenräume durchströmt und schnell eine gleichmäßige Temperaturverteilung über den Querschnitt des Coils erreicht wird.

Nach dem Weichglühen wird erfindungsgemäß das mit der Al-Schicht belegte Titan-Flachprodukt zu dem jeweiligen Bauteil verformt. Da die Verformbarkeit der Ti-Substrate mit zunehmendem Legierungsgrad abnimmt, ist es vorteilhaft, insbesondere bei Verarbeitung von hoch legierten Ti-Flachprodukten als Kernmaterial die Verformung der erfindungsgemäß mit einer Al-Schicht beschichteten Ti-Substrate in einer erwärmten Umformeinrichtung vorzunehmen.

Anschließend wird in an sich bekannter Weise die Wärmebehandlung durchgeführt, bei der sich die aus intermetallischen Phasen bestehende Schicht an der Oberfläche des Bauteils bildet, durch die das Bauteil im praktischen Einsatz dauerhaft gegen eine übermäßige Oxidation geschützt ist. Diese Wärmebehandlung kann, wie ebenfalls an sich bereits bekannt, in einem gesonderten Arbeitsgang durchgeführt werden oder im praktischen Einsatz dadurch erfolgen, dass das Bauteil den jeweils ausreichend hohen Einsatztemperaturen ausgesetzt wird.

Nachfolgend wird die Erfindung anhand von Ausführungsbeispielen näher erläutert.

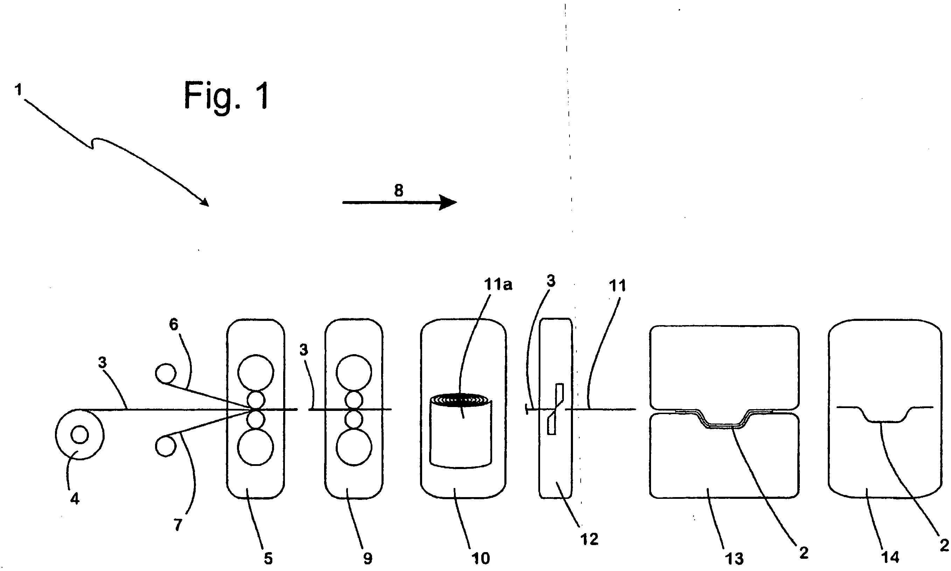

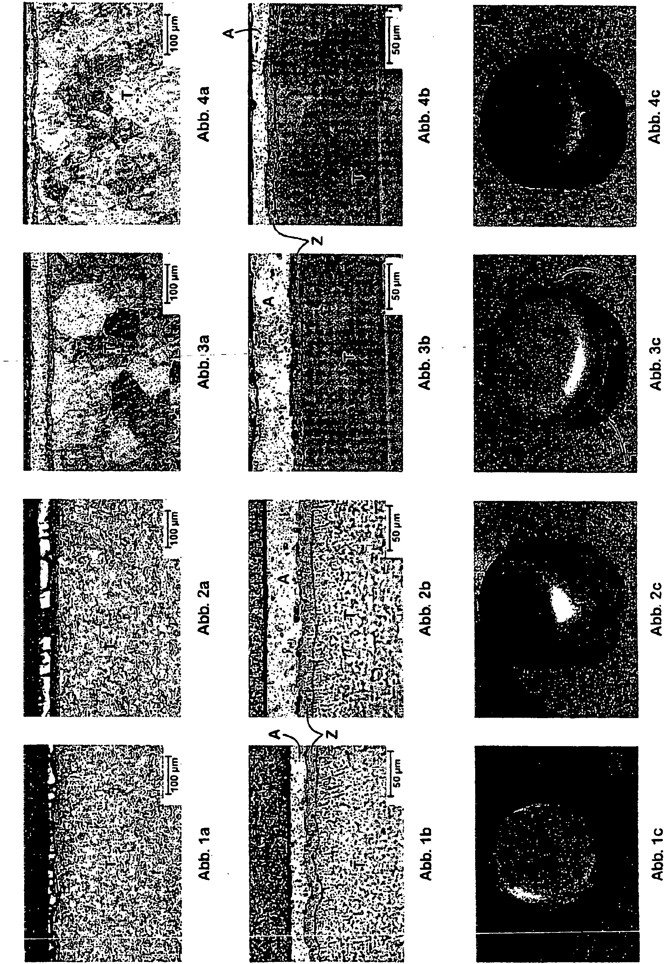

Die Figur 1 zeigt schematisch eine Fertigungslinie 1 zum Herstellen eines Bauteils 2 aus einem beidseitig mit einer AlSi-Schicht beschichteten Ti-Band 3.

Die Fertigungslinie 1 umfasst dazu eine Abhaspeleinrichtung 4, die das Ti-Band 3 abwickelt und in eine Walzplattiereinrichtung 5 einspeist. In der Walzplattiereinrichtung 5 wird auf die Oberseite und die Unterseite des Ti-Bands 3 jeweils eine aus einer AlSi-Legierung erzeugte AlSi-Folie 6 (Oberseite),7 (Unterseite) aufgebracht.

Das derart walzplattierte Ti-Band 3 durchläuft anschließend ein in Förderrichtung 8 inline zu der Walzplattiereinrichtung 5 angeordnetes Kaltwalzgerüst 9, in dem der aus den AlSi-Folien 6,7 und dem Ti-Band 3 gebildete Werkstoffverbund auf die jeweils geforderte Solldicke reduziert wird. Der dabei erreichte Umformgrad ist so groß, dass sich eine Mikrostruktur des Ti-Bands 3 einstellt, die in Kombination mit der anschließend durchgeführten Wärmebehandlung eine optimale Verformbarkeit ergibt.

Nach dem Kaltwalzen wird das Ti-Band 3 in einem hier nicht gezeigten Durchlauf- oder dem hier angedeuteten Haubenglühofen 10 geglüht. Wird die Glühung im Haubenglühofen 10 durchgeführt, so wird dazu das Ti-Band auf einer geeigneten Wickeleinrichtung vorzugsweise als Open-Coil 11a mit zueinander beabstandeten Wickellagen gewickelt, um eine gleichmäßige Erwärmung und Temperaturverteilung zu sichern.

Von dem geglühten Ti-Band 3 werden dann Ti-Bleche 11 mittels einer Querteil-Schere 12 abgeteilt.

Die derart erhaltenen Ti-Bleche 11 werden dann in einer Presse 13 mit einem erforderlichenfalls erwärmten Umformwerkzeug zu dem jeweiligen Bauteil 2 tiefgezogen.

Das so erhaltene Bauteil 2 wird abschließend in einem weiteren Ofen 14 noch einmal wärmebehandelt, um eine intermetallische Phasen umfassende Deckschicht auf dem Bauteil 2 auszubilden.

Zum Nachweis der Wirkung der Erfindung ist ein aus einem niedrig legierten Titanwerkstoff W1 hergestelltes, 1,6 mm dickes Titanband B1 verwendet worden, dessen Legierung in Tabelle 1 angegeben ist. Zum Vergleich ist ein ebenfalls 1,6 mm dickes Titanband B2 verarbeitet worden, das aus hochreinem Titan W2 hergestellt worden ist. Die Gehalte an Verunreinigungen des hochreinen Titanwerkstoffs W2 sind in Tabelle 1 ebenfalls angegeben.

**Tabelle 1**

| | Al | C | Cr | Fe | H | N | Ni | O | Si | Sn |
|---|---|---|---|---|---|---|---|---|---|---|
| W1 | 0,019 | 0,008 | 0,014 | 0,23 | 0,0013 | 0,0004 | 0,010 | 0,0010 | 0,33 | 0,004 |
| W2 | 0,003 | 0,005 | 0,011 | 0,025 | 0,0009 | 0,0003 | 0,015 | 0,0014 | <0, 002 | <0, 002 |

| | | | | | | | | | | |
|---|---|---|---|---|---|---|---|---|---|---|
| Rest Ti und unvermeidbare Verunreinigungen, Angaben in Masse-% | | | | | | | | | | |

Die derart zusammengesetzten Titanbänder B1 und B2 sind beidseitig mit einer 0,11 mm bzw. 0,08 mm dicken AlSi0,8-Folie walzplattiert worden, deren Zusammensetzung in Tabelle 2 angegeben ist.

**Tabelle 2**

| Si | Mn | Cu | Cr | Ti | Zn | Fe | Mg |
|---|---|---|---|---|---|---|---|
| 0,8 | <0,03 | <0,05 | <0, 03 | 0,01 | 0,01 | 0,26 | 0,01 |

| | | | | | | | |
|---|---|---|---|---|---|---|---|
| Rest Al und unvermeidbare Verunreinigungen, Angaben in Masse-% | | | | | | | |

Aus dem entsprechend mit den AlSi0,8-Folien walzplattierten Titanband B1 ist eine erfindungsgemäße Probe PE1 abgeteilt worden, die anschließend kaltgewalzt worden ist. Zusätzlich ist vom walzplattierten Titanband B1 eine erste Vergleichsprobe PV1 abgeteilt worden, die nach dem Walzplattieren im Gegensatz zur Probe PE1 jedoch nicht mehr kaltgewalzt worden ist.

Aus dem mit den AlSi0,8-Folien beschichteten Titanband B2 sind nach dem Walzplattieren zwei Vergleichsproben PV2 und PV3 abgeteilt worden. Während die Vergleichsprobe PV2 nach dem Walzplattieren nicht mehr kaltgewalzt worden ist, ist die Vergleichsprobe PV3 wie die erfindungsgemäße Probe PE1 zusätzlich kaltgewalzt worden, um gegenüber der Probe PV2 optimierte Eigenschaften zu erreichen. Die beim Walzplattieren und Kaltwalzen eingehaltenen Parameter sind in Tabelle 3 angegeben.

**Tabelle 3**

| Probe | Dicke des Ti-Bandes [mm] | Dicke der AlSi0,8-Folie [mm] | Kaltwalzung | Gesamtverformung [%] | Enddicke [mm] |
|---|---|---|---|---|---|
| PE1 | 1,6 | 0,08 | JA | 60 | 0,7 |
| PV1 | 1,6 | 0,08 | NEIN | 32 | 1,2 |
| PV2 | 1,6 | 0,11 | NEIN | 34 | 1,2 |
| PV3 | 1,6 | 0,08 | JA | 72 | 0,5 |

In Tabelle 4 sind für die erfindungsgemäße Probe PE1 und die Vergleichsproben PV1, PV2 und PV3 die Dehngrenze R_{p0,2}, die Zugfestigkeit Rₘ und die Bruchdehnung A₈₀ angegeben.

**Tabelle 4**

| Probe | Dehngrenze R_{p0,2} [MPa] | Zugfestigkeit Rₘ [MPa] | Bruchdehnung A₈₀ [%] |
|---|---|---|---|
| PE1 | 706 | 840 | 6,4 |
| PV1 | 631 | 747 | 7,7 |
| PV2 | 479 | 518 | 8,3 |
| PV3 | 576 | 717 | 6,2 |

Es zeigt sich, dass die erfindungsgemäße Probe PE1 höhere Festigkeitswerte besitzt als die Vergleichsproben PV1, PV2 und PV3. Gleichzeitig weist die erfindungsgemäße Probe PE1 jedoch niedrigere Bruchdehnungswerte als die Vergleichsproben PV1 und PV2 auf. Diese gegenüber den nur walzplattierten, jedoch nicht kaltgewalzten Vergleichsproben PV1 und PV2 besseren Festigkeitswerte und die geringeren Bruchdehnungswerte der erfindungsgemäßen Probe PE1 und der Vergleichsprobe PV3 erklären sich aus den höheren Verformungsgraden, die bei den Proben PE1 und PV3 in Folge des kombinierten Walzplattierens und Kaltwalzens erzielt worden sind.

Aus von den Vergleichsproben PV2 und PV3 abgeteilten Blechzuschnitten, deren Ti-Substrat aus dem hochreinen Titanwerkstoff W2 erzeugt worden ist, ließen sich bereits im walzharten Zustand Näpfchen tiefziehen, während dies bei der erfindungsgemäßen Probe PE1 und der Vergleichsprobe PV1 nicht möglich war, deren Ti-Substrat jeweils aus dem niedrig legierten konventionellen Ti-Werkstoff W1 erzeugt worden ist.

Nach der Walzplattierung und der bei den Proben PE1 und PV3 zusätzlich durchgeführten Kaltwalzung sind von den Proben PE1, PV1, PV2 und PV3 abgeteilte Blechzuschnitte im Haubenglühofen bei einer Glühtemperatur von 550 °C, 600 °C und 620 °C für jeweils 16 h (PV1, PV2 und PV3) und 9 h (PE1) geglüht worden. Ein daraufhin durchgeführter weiterer Tiefziehversuch ergab, dass sich aus dem aus der Vergleichsprobe PV1 gewonnenen Blech nach wie vor kein Näpfchen tiefziehen ließ, während dies bei den von der erfindungsgemäßen Probe PE1 und den Vergleichsproben PV2 und PV3 abgeteilten Blechen möglich war.

In einem weiteren Glühversuch wurden bei unterschiedlichen Glühtemperaturen und Glühzeiten aus der erfindungsgemäßen Probe PE1 und den Vergleichsproben PV1, PV2 und PV3 abgeteilte Blechzuschnitte im Haubenglühofen weichgeglüht. Von den geglühten Blechen wurden Schliffproben angefertigt, die in Abb. 1a, 1b (Probe PE1, bei 620 °C/9 h), Abb. 2a,2b (Probe PV1, bei 630 °C/9 h), Abb. 3a,3b (Probe PV2, bei 630 °C/4 h) und Abb. 4a,4b (Probe PV3, bei 630 °C/4 h) wiedergegeben sind.

Die Abbildungen 1b, 2b, 3b, 4b zeigen jeweils einen vergrößerten Ausschnitt der Abbildungen 1a, 2a, 3a und 4a. Deutlich sind in den Abbildungen 1b, 2b, 3b, 4b die AlSi0,8-Deckschicht A, die Zwischenschicht Z und das jeweilige Titan-Substrat T zu erkennen.

Des Weiteren zeigen die Abb. 1a, 2a, 3a, 4a, dass die aus den Vergleichsproben PV2, PV3 gewonnenen Bleche (Abb. 3a und 4a) im Vergleich zu den aus der erfindungsgemäßen Probe PE1 gewonnenen Bleche (Abb. 1a) eine deutliche Kornvergröberung im Bereich des aus dem hochreinen Titan-Werkstoff W1 erzeugten Titan-Substrats T aufwiesen (Korndurchmesser teilweise größer als 100 µm). Dies galt insbesondere für das aus der Probe PV2 gewonnene Blech, das im Zuge des Walzplattierens ohne anschließendes Kaltwalzen mit einem Umformgrad von nur 34 % umgeformt worden ist.

Im Vergleich zum aus der Vergleichsprobe PV1 gewonnenen Blech (Abb. 2a) zeigt das aus der erfindungsgemäßen Probe PE1 erhaltene Blech (Abb. 1a) nach dem für die weitere Tiefziehverformung notwendigen Weichglühen eine feinere Kornstruktur im Ti-Substrat T und eine verminderte Dicke der Zwischenschicht Z. Dies belegt, dass sich durch eine Verminderung der Glühtemperaturen auf die Dicke der Zwischenschicht unmittelbar steuern lässt. So lassen sich bei Glühtemperatur von weniger als 630 °C betriebssicher Zwischenschichtdicken von weniger als 16 µm erzeugen, die zu einem weiter verbesserten Verformungsverhalten führen. Um die in Bezug auf die Bildung einer unerwünscht dicken Zwischenschicht kritische Grenze von 630 °C bei der Glühung einzuhalten, sollte daher in der Praxis bei Glühtemperaturen gearbeitet werden, die auch unter Berücksichtigung der Regelungenauigkeit ausreichend weit unterhalb von 630 °C liegt.

Mit aus den Proben PE1 und PV1 gewonnenen Blechen sind Tiefziehversuche durchgeführt worden. Diese ergaben, dass sich aus den aus den Proben PE1 und PV1 gewonnenen Blechen nach dem Weichglühen problemlos Näpfchen sowie komplexer geformte Bauteile für eine Abgasanlage formen ließen. Es trat keine Ablösung der Auflage A ein.

Für die aus den Vergleichsproben PV2 und PV3 gewonnenen Bleche ergaben die Tiefziehversuche dagegen, dass die Glühtemperatur von 630 °C trotz der verkürzten Glühzeiten zu hoch war. Die dicke Zwischenschicht Z von bis zu 17 µm beim aus der Vergleichsprobe PV2 abgeteilten Blech führte zu einer am tiefgezogenen Näpfchen deutlich erkennbaren Auflageablösung.

Beim aus der Vergleichsprobe PV3 abgeteilten Blech trat dieses Problem nicht auf. Aufgrund der dünneren Al-Auflage ist die Oberfläche des Näpfchens im Zuge der Umformung jedoch über bestimmte Bereiche vollständig alitiert worden, was eine dunkle Farbe der Auflageschicht A verursachte.

In Abb. 1c ist das aus der erfindungsgemäßen Probe PE1, in Abb. 2c das aus der Vergleichsprobe PV1, in Abb. 3c das aus der Vergleichsprobe PV2 und in Abb.4c das aus der Vergleichsprobe PV3 erzeugte Näpfchen dargestellt. Auf die Ablösung beim aus der Probe PV2 erzeugten Näpfchen ist durch in Abb. 3c eingetragene Pfeile hingewiesen.

Um die Hochtemperaturbeständigkeit der Proben PE1 und PV1, PV2 und PV3 zu beurteilen, wurden weitere Versuche bei 900 °C nach 100 h an allen aus diesen Proben gewonnenen und weichgeglühten Blechen durchgeführt. Die Hochtemperaturbeständigkeit, die Korngröße, die maximale Zwischenschichtdicke sowie die Tiefziehergebnisse der aus den Proben PE1, PV1, PV2 und PV3 gewonnenen Bleche sind für den jeweiligen Glühzustand in Tabelle 5 zusammengefasst.

**Tabelle 5**

| Probe | Weichglühtemp. [°C] | Glühzeit [h] | Korngröße in Ti-Substrat (ASTM) | Zwischenschichtdicke [µm] | Tiefziehergebnis | Hochtemperaturbeständigkeit (900 °C/100 h) | Fertigungssicherheit |
|---|---|---|---|---|---|---|---|
| PE1 | 620 | 9 | 10 | max. 12 | gut | gut | gut |
| PV1 | 620 | 16 | 9-10 | max. ∼12 | Riss | - | - |
| PV1 | 630 | 9 | 9 | max. 16 | gut | gut | kritisch |
| PV2 | 620 | 16 | 5 | max, ∼14 | gut | schlecht | - |
| PV2 | 630 | 4 | 2 | max. ∼17 | Ablösung | schlecht | - |
| PV3 | 620 | 16 | 6-7 | max. ∼13 | gut | schlecht | - |
| PV3 | 630 | 4 | 4 | max. ∼17 | Dunkel | schlecht | - |

Im Vergleich zu den Proben PV2, PV3 mit dem Ti-Substrat aus dem hochreinen Titan-Werkstoff W2 zeigt die Probe PE1 mit dem Ti-Substrat aus dem niedrig legierten Titanwerkstoff W1 eine deutlich feinere Kornstruktur und verbesserte Hochtemperaturbeständigkeiten.

Eine weitere Optimierung der Eigenschaften wurde durch die zusätzliche Kaltwalzung bei den Proben PE1 und PV3 erreicht, da dadurch ein für die Rekristallisation günstigeres Gefüge erzeugt worden ist. Dies führt zu einer Rekristallisation bei niedrigerer Temperatur (PE1) und deshalb zur Ausbildung einer vergleichsweise dünnen intermetallischen Zwischenschicht beim Weichglühen. Diese erlaubt einen sicheren Fertigungsprozess, wenn die Glühparameter eine unvermeidbare Abweichung auftaucht. Je niedriger die Rekristallisationstemperatur, desto dünner ist die intermetallische Zwischenschicht nach dem Weichglühen. Daher lässt sich das Ausführungsbeispiel PE1 mit höherer Fertigungssicherheit herstellen als beispielsweise das Vergleichsbeispiel PV1.

Zudem stellt sich in Folge der zusätzlichen Kaltwalzung nach dem Weichglühen ein besseres Verformungsverhalten bei der Bauteilumformung ein. Dies ist insbesondere für niedrig und höher legierte Titanlegierungen sehr wichtig, da sie aufgrund der Atomgitterstruktur grundsätzlich eine begrenzte Verformbarkeit bei Raumtemperatur aufweisen.

**Tabelle A**

| **Werkstoff** | **Fe** | **O** | **N** | **C** | **H** | **Pd** | **Ni** | **Mo** | **Si** |
|---|---|---|---|---|---|---|---|---|---|
| **TiNi0,8Mo0,3** | 0 | 0 | 0 | 0 | 0 | - | 0,6 | 0,2 | - |
| | | | | | | | | | |
| | 0,25 | 0,25 | 0,03 | 0,06 | 0,013 | | 0,9 | 0,4 | |
| **TilPd** | 0 | 0 | 0 | 0 | 0 | 0,15 | - | - | - |
| | | | | | | | | | |
| | 0,15 | 0,12 | 0,05 | 0,06 | 0,013 | 0,25 | | | |
| **Ti2Pd** | 0 | 0 | 0 | 0 | 0 | 0,15 | - | - | - |
| | | | | | | | | | |
| | 0,2 | 0,18 | 0,05 | 0,06 | 0,013 | 0,25 | | | |
| **Ti3Pd** | 0 | 0 | 0 | 0 | 0 | 0,15 | - | - | - |
| | | | | | | | | | |
| | 0,25 | 0,25 | 0,05 | 0,06 | 0,013 | 0,25 | | | |
| **TiSi0,3** | 0 | 0 | 0 | 0 | 0 | - | - | - | 0,05 |
| | | | | | | | | | |
| | 0,3 | 0,25 | 0, 05 | 0,1 | 0,015 | | | 0,5 | 0,5 |

| | | | | | | | | | |
|---|---|---|---|---|---|---|---|---|---|
| Rest Ti, Sonstige einzeln bis zu 0,1 % und zusammen bis zu 0,4 % | | | | | | | | | |

**Tabelle B**

| **Werkstoff** | **Al** | **V** | **Sn** | **Zr** | **Mo** | **Cu** | **Si** | **Fe** | **O** | **N** | **C** | **H** |
|---|---|---|---|---|---|---|---|---|---|---|---|---|
| **3.7145** | 5,5 | | 1,8 | 3,6 | 1,8 | | 0,06 | | ≤ | ≤ | ≤ | ≤ |
| | - | - | - | - | | - | | ≤ | 0,15 | 0,05 | 0,05 | 0,015 |
| | 6,5 | | 2,2 | 4,4 | 2,2 | | 0,12 | 0,25 | | | | |
| **3.7175** | 5,0 | 5,0 | 1,5 | | | 0,35 | | 0,35 | ≤ | ≤ | ≤ | ≤ |
| | - | | | - | - | - | - | | 0,2 | 0,04 | 0,05 | 0,015 |
| | 6,0 | 6,0 | 2,5 | | | 1,0 | | 1,0 | | | | |
| **3.7165** | 5,5 | 3,5 | | | | | | | ≤ | ≤ | ≤ | ≤ |
| | | - | - | - | - | - | - | ≤ | 0,2 | 0,05 | 0,08 | 0,015 |
| | 6,75 | 4,5 | | | | | | 0,3 | | | | |
| **3.7155** | 5,7 | | | 4,0 | 0,25 | | 0,1 | | ≤ | ≤ | ≤ | ≤ |
| | - | - | - | | | - | - | ≤ | 0,19 | 0,05 | 0,08 | 0,015 |
| | 6,3 | | | 6,0 | 0,75 | | 0,4 | 0,2 | | | | |
| **3.7110** | 4,5 | | | | | | | 2,0 | ≤ | ≤ | ≤ | ≤ |
| | | - | - | - | - | - | - | - | 0,2 | 0,05 | 0,08 | 0,015 |
| | 5,5 | | | | | | | 3,0 | | | | |
| **3.7115** | 4,5 | | 2,0 | | | | | | ≤ | ≤ | ≤ | ≤ |
| | - | - | - | - | - | - | - | ≤ | 0,2 | 0,05 | 0,08 | 0,020 |
| | 5,5 | | 3,0 | | | | | 0,5 | | | | |
| **3.7185** | 3,0 | | 1,5 | - | 3,0 | | 0,3 | | ≤ | ≤ | ≤ | ≤ |
| | - | - | | | - | - | | ≤ | 0,25 | 0,05 | 0,08 | 0,015 |
| | 5,0 | | 2,5 | | 5,0 | | 0,7 | 0,2 | | | | |
| **3.7195** | 2,5 | 2,0 | | | | | | | ≤ | ≤ | ≤ | ≤ |
| | | | - | - | - | - | - | ≤ | 0,12 | 0,04 | 0,05 | 0,015 |
| | 3,5 | 3,0 | | | | | | 0,3 | | | | |

| | | | | | | | | | | | | |
|---|---|---|---|---|---|---|---|---|---|---|---|---|
| Rest Ti, Sonstige einzeln bis zu 0,1 % und zusammen bis zu 0,4 % | | | | | | | | | | | | |

## Patentansprüche

1. Verfahren zum Herstellen eines Bauteils (2) für Hochtemperaturanwendungen aus einem aus einer Titanlegierung erzeugten Titan-Flachprodukt (3), wie aus einer Titanlegierung erzeugtes Titanblech oder -band (3), **gekennzeichnet durch** folgende Arbeitsschritte und Bedingungen:
a) Aufbringen einer Al-Scnicht (6,7) auf mindestens eine Seite des Titan-Flachprodukts (3) **durch** Walzplattieren des Titan-Flachprodukts (3) mit einer Al-Folie die aus einer Al-Legierung erzeugt ist,
b) Kaltwalzen des mit der Al-Schicht (6,7) belegten Titan-Flachprodukts (3),
c) wobei die Ausgangsdicke der Al-Folie (6,7) im Bereich von 0,03-0,3 mm und die Ausgangsdicke des Titan-Flachprodukts (3) im Bereich von 1,0-8,0 mm liegt und wobei der im Zuge des Walzplattierens und des Kaltwalzens erzielte, auf die Gesamtdicke von Titan-Flachprodukt (3) und Al-Folie (6,7) bezogene Umformgrad 30-90 % beträgt und die Dicke der Al-Folie (6,7) unter Berücksichtigung des Gesamtverformungsgrades und der Solldicke des mit der Al-Schicht (6,7) belegten Titan-Flachprodukts (3) so gewählt wird, dass die Dicke der auf dem Titan-Flachprodukt (3) nach dem Walzplattieren und dem Kaltwalzen jeweils vorhandenen Al-Schicht (6,7) 90 µm, insbesondere 70 µm, nicht überschreitet,
d) Weichglühen des mit der Al-Schicht (6,7) belegten Titan-Ftachprodukts (3) im Durchlaufofen (10) bei Glühtemperaturen von 600-750 °C für eine Dauer von 0,1-10 min oder im Haubenofen (10) bei Glühtemperaturen von 550-650 °C für eine Dauer von 1-30 h, °C
e) Umformen des weichgeglühten, mit der Al-Schicht (6,7) belegten Titan-Flachprodukts zu dem Bauteil (2)
f) Wärmebehandeln des aus dem mit der Al-Schicht belegten Titan-Flachprodukt (3) geformten Bauteils (2) zur Ausbildung einer intermetallische Phasen umfassenden Deckschicht auf dem Bauteil (2)

2. Verfahren nach Anspruch 1, **dadurch gekennzeichnet, dass** das Titan-Flachprodukt (3) aus einer Ti-Legierung erzeugt ist, die folgende Zusammensetzung aufweist (in Masse-%):
| | |
|---|---|
| N: | ≤ 0,05 %, |
| C: | ≤ 0,1 %, |
| H: | ≤ 0,015 %, |
| Fe: | ≤ 0,3 %, |
| O: | ≤ 0,25%, |
| Al: | ≤ 0,1 %, |
sowie 0,05 - 0,5 % Si oder 0,10 - 0,3 % Pd jeweils einzeln
oder
0,5 - 1,0 % Ni und 0,1 - 0,5 % Mo gemeinsam,
Rest Ti und unvermeidbare Verunreinigungen, wobei der Anteil der den Verunreinigungen zugeordneten Elemente einzeln bis zu 0,1 % und die Summe der Verunreinigungen bis zu 0,4 % betragen können.

3. Verfahren nach Anspruch 1, **dadurch gekennzeichnet, dass** das Titan-Flachprodukt (3) aus einer Ti-Legierung erzeugt ist, die folgende Zusammensetzung aufweist (in Masse-%):
Al: 2,3 - 7,8 %,
sowie wahlweise mindestens eines oder mehrere Elemente aus der Gruppe V, Sn, Zr, Mo, Cu, Si, Fe, O, N, C, H,
wobei für deren Gehalte gilt
V: ≤ 6,9 %,
Sn: ≤ 3, 5 %,
Zr: ≤ 6,9 %,
Mo: ≤ 5,8 %,
Cu: ≤ 1,2 %,
Si: ≤ 0,8 %,
Fe: ≤ 3, 5 %,
O: ≤ 0,3 %
N: ≤ 0,06 %,
C: ≤ 0,09 %,
H: ≤ 0,02 %,
Rest Ti und unvermeidbare Verunreinigungen, wobei der Anteil der den Verunreinigungen zugeordneten Elemente einzeln bis zu 0,1 % und die Summe der Verunreinigungen bis zu 0,4 % betragen können.

4. Verfahren nach Anspruch 1, **dadurch gekennzeichnet, dass** das Titan-Flachprodukt (3) aus einer Ti-Legierung erzeugt ist, die folgende Zusammensetzung aufweist (in Masse-%):
Fe: 0, 15 - 0, 35 %,
O: ≤ 0,38 %,
N: ≤ 0,06 %,
C: ≤ 0,08 %,
H: ≤ 0,015%,
Rest Ti und unvermeidbare Verunreinigungen, wobei der Anteil der den Verunreinigungen zugeordneten Elemente einzeln bis zu 0,1 % und die Summe der Verunreinigungen bis zu 0,4 % betragen können.

5. Verfahren nach einem der voranstehenden Ansprüche,
**dadurch gekennzeichnet, dass** die die Al-Schicht bildende Al-Folie (6,7) aus einer AlSi-Legierung, insbesondere einer AlSi0,8-Legierung, erzeugt ist.

6. Verfahren nach einem der voranstehenden Ansprüche,
**dadurch gekennzeichnet, dass** der im Zuge des Walzplattierens erzielte, auf die Gesamtdicke von Titan-Flachprodukt (3) und Aluminiumfolie (6,7) bezogene Umformgrad 40 - 80 % beträgt.

7. Verfahren nach einem der voranstehenden Ansprüche,
**dadurch gekennzeichnet, dass** das Titan-Flachprodukt (3) beidseitig mit einer Al-Schicht (6,7) belegt wird.

8. Verfahren nach einem der voranstehenden Ansprüche,
**dadurch gekennzeichnet, dass** das Weichglühen im Haubenofen (10) durchgeführt wird und das mit der Al-Schicht (6,7) belegte Titan-Flachprodukt (3) als Open-Coil (11a) in den Haubenofen (10) gesetzt wird.

## Claims

1. Process for producing a component (2) for high-temperature applications from a titanium flat product (3) produced from a titanium alloy, such as titanium sheet or strip (3) produced from a titanium alloy, **characterized by** the following working steps and conditions:
a) applying an Al layer (6, 7) to at least one side of the titanium flat product (3) by roll cladding the titanium flat product (3) with an Al foil (6, 7) which is produced from an Al alloy,
b) cold rolling the titanium flat product (3) covered with the Al layer (6, 7),
c) wherein the starting thickness of the Al foil (6, 7) lies in the range of 0.03-0.3 mm and the starting thickness of the titanium flat product (3) lies in the range of 1.0-8.0 mm, and wherein the degree of forming relating to the total thickness of the titanium flat product (3) and the Al foil (6, 7) which is achieved in the course of the roll cladding and of the cold rolling amounts to 30-90%, and the thickness of the Al foil (6, 7) is chosen, taking into consideration the total degree of deformation and the desired thickness of the titanium flat product (3) covered with the Al layer (6, 7), in such a way that the thickness of the Al layer (6, 7) present in each case after the roll cladding and the cold rolling on the titanium flat product (3) does not exceed 90 µm, in particular 70 µm,
d) soft annealing the titanium flat product (3) covered with the Al layer (6, 7) in a continuous furnace (10) at annealing temperatures of 600-750°C for a period of 0.1-10 min or in a bell-type furnace (10) at annealing temperatures of 550-650°C for a period of 1-30 h,
e) forming the soft-annealed titanium flat product (3) covered with the Al layer (6, 7) to form the component (2),
f) heat treating the component (2) formed from the titanium flat product (3) covered with the Al layer (6, 7) to form a top layer comprising intermetallic phases on the component (2).

2. Process according to Claim 1, **characterized in that** the titanium flat product (3) is produced from a Ti alloy having the following composition (in % by mass) :
N: ≤ 0.05%,
C: ≤ 0.1%,
H: ≤ 0.015%,
Fe: ≤ 0.3%,
O: ≤ 0.25%,
Al: ≤ 0.1%,
and also
0.05-0.5% Si or 0.10-0.3% Pd each individually
or
0.5-1.0% Ni and 0.1-0.5% Mo together,
remainder Ti and unavoidable impurities, where the proportion of the elements assigned to the impurities individually can be up to 0.1% and the sum of the impurities can be up to 0.4%.

3. Process according to Claim 1, **characterized in that** the titanium flat product (3) is produced from a Ti alloy having the following composition (in % by mass) :
Al: 2.3-7.8%,
and also optionally at least one or more elements from the group consisting of V, Sn, Zr, Mo, Cu, Si, Fe, O, N, C and H, where the following applies for the contents thereof:
V: ≤ 6.9%,
Sn: ≤ 3.5%,
Zr: ≤ 6.9%,
Mo: ≤ 5.8%,
Cu: ≤ 1.2%,
Si: ≤ 0.8%,
Fe: ≤ 3.5%,
O: ≤ 0.3%,
N: ≤ 0.06%,
C: ≤ 0.09%,
H: ≤ 0.02%,
remainder Ti and unavoidable impurities, where the proportion of the elements assigned to the impurities individually can be up to 0.1% and the sum of the impurities can be up to 0.4%.

4. Process according to Claim 1, **characterized in that** the titanium flat product (3) is produced from a Ti alloy having the following composition (in % by mass) :
Fe: 0.15-0.35%,
O: ≤ 0.38%,
N: ≤ 0.06%,
C: ≤ 0.08%,
H: ≤ 0.015%,
remainder Ti and unavoidable impurities, where the proportion of the elements assigned to the impurities individually can be up to 0.1% and the sum of the impurities can be up to 0.4%.

5. Process according to one of the preceding claims, **characterized in that** the Al foil (6, 7) which forms the Al layer is produced from an AlSi alloy, in particular an AlSi0.8 alloy.

6. Process according to one of the preceding claims, **characterized in that** the degree of forming relating to the total thickness of the titanium flat product (3) and the aluminium foil (6, 7) which is achieved in the course of the roll cladding amounts to 40-80%.

7. Process according to one of the preceding claims, **characterized in that** the titanium flat product (3) is covered with an Al layer (6, 7) on both sides.

8. Process according to one of the preceding claims, **characterized in that** the soft annealing is carried out in a bell-type furnace (10) and the titanium flat product (3) covered with the Al layer (6, 7) is placed as an open coil (11a) into the bell-type furnace (10).

## Revendications

1. Procédé pour fabriquer une pièce (2) destinée à des utilisations à haute température en un produit plat en titane (3) fabriqué à partir d'un alliage de titane, comme une tôle ou une bande en titane (3) produite à partir d'un alliage de titane, **caractérisé par** les opérations et les conditions suivantes:
a) dépôt d'une couche d'aluminium (6, 7) sur au moins une face du produit plat en titane (3) par placage par laminage du produit plat en titane (3) avec une feuille d'aluminium (6, 7), qui a été produite à partir d'un alliage d'aluminium,
b) laminage à froid du produit plat en titane (3) muni de la couche d'aluminium (6, 7),
c) dans lequel l'épaisseur initiale de la feuille d'aluminium (6, 7) se situe dans la plage de 0,03 - 0,3 mm et l'épaisseur initiale du produit plat en titane (3) se situe dans la plage de 1,0 - 8,0 mm et dans lequel le taux de déformation produit au cours du placage par laminage et du laminage à froid, rapporté à l'épaisseur totale du produit plat en titane (3) et de la feuille d'aluminium (6, 7), vaut 30 - 90 % et l'épaisseur de la feuille d'aluminium, en tenant compte du taux de déformation total et de l'épaisseur théorique du produit plat en titane (3) muni de la couche d'aluminium (6, 7), est choisie de telle manière que l'épaisseur de la couche d'aluminium (6, 7) respectivement présente sur le produit plat en titane (3) après le placage par laminage et le laminage à froid, ne dépasse par 90 µm, en particulier 70 µm,
d) recuit d'adoucissement du produit plat en titane (3) muni de la couche d'aluminium (6, 7) dans un four continu (10) à des températures de recuit de 600-750°C pendant une durée de 0,1 - 10 min ou dans un four à cloche (10) à des températures de recuit de 550-650°C pendant une durée de 1-30 h,
e) déformation du produit plat en titane (3) muni de la couche d'aluminium (6, 7) adouci par recuit pour former la pièce (2),
f) traitement thermique de la pièce (2) formée à partir du produit plat en titane (3) muni de la couche d'aluminium (6, 7) pour la formation d'une couche de recouvrement contenant des phases intermétalliques sur la pièce (2).

2. Procédé selon la revendication 1, **caractérisé en ce que** le produit plat en titane (3) est fabriqué à partir d'un alliage de titane, qui présente la composition suivante (en % en masse):
N: ≤ 0,05 %
C: ≤ 0,1 %
H: ≤ 0,015 %
Fe: ≤ 0,3 %
O: ≤ 0,25 %
Al: ≤ 0,1 %
ainsi que
0,05 - 0,5 % Si ou 0,10 - 0,3 % Pd chacun individuellement
ou
0,5 - 1,0 % Ni et 0,1 - 0,5 % Mo ensemble,
le reste étant du titane et des impuretés inévitables, dans lequel la proportion des éléments associés aux impuretés peut valoir individuellement jusqu'à 0,1 % et la somme des impuretés peut valoir jusqu'à 0,4 %.

3. Procédé selon la revendication 1, **caractérisé en ce que** le produit plat en titane (3) est fabriqué à partir d'un alliage de titane, qui présente la composition suivante (en % en masse):
Al: 2,3 - 7,8 %,
ainsi que, au choix, un ou plusieurs des éléments du groupe V, Sn, Zr, Mo, Cu, Si, Fe, O, N, C, H, dont la teneur vaut
V: ≤ 6,9 %
Sn: ≤ 3,5 %
Zr: ≤ 6,9 %
Mo: ≤ 5,8 %
Cu: ≤ 1,2 %
Si: ≤ 0,8 %
Fe: ≤ 3,5 %
O: ≤ 0,3 %
N: ≤ 0,06 %
C: ≤ 0,09 %
H: ≤ 0,02 %
le reste étant du titane et des impuretés inévitables, dans lequel la proportion des éléments associés aux impuretés peut valoir individuellement jusqu'à 0,1 % et la somme des impuretés peut valoir jusqu'à 0,4 %.

4. Procédé selon la revendication 1, **caractérisé en ce que** le produit plat en titane (3) est fabriqué à partir d'un alliage de titane, qui présente la composition suivante (en % en masse):
Fe: 0,15 - 0,35 %
O: ≤ 0,38 %
N: ≤ 0,06 %
C: ≤ 0,08 %
H: ≤ 0,015 %
le reste étant du titane et des impuretés inévitables, dans lequel la proportion des éléments associés aux impuretés peut valoir individuellement jusqu'à 0,1 % et la somme des impuretés peut valoir jusqu'à 0,4 %.

5. Procédé selon l'une quelconque des revendications précédentes, **caractérisé en ce que** la feuille d'aluminium (6, 7) formant la couche d'aluminium est produite à partir d'un alliage AlSi, en particulier d'un alliage AlSi0,8.

6. Procédé selon l'une quelconque des revendications précédentes, **caractérisé en ce que** le taux de déformation atteint au cours du placage par laminage, rapporté à l'épaisseur totale du produit plat en titane (3) et de la feuille d'aluminium (6, 7), vaut 40 - 80 %.

7. Procédé selon l'une quelconque des revendications précédentes, **caractérisé en ce que** le produit plat en titane (3) est muni sur les deux faces d'une couche d'aluminium (6, 7).

8. Procédé selon l'une quelconque des revendications précédentes, **caractérisé en ce que** le recuit d'adoucissement est effectué dans un four à cloche (10) et le produit plat en titane (3) muni de la couche d'aluminium (6, 7) est déposé dans le four à cloche (10) sous forme de bobine expansée (11a).
